# EUROPÄISCHE PATENTSCHRIFT

(11) **EP 1 521 680 B1**
(45) Veröffentlichungstag und Bekanntmachung des Hinweises auf die Patenterteilung: **11.08.2021**
(21) Anmeldenummer: 03740215.3
(22) Anmeldetag: 10.06.2003
(51) Int. Cl.: B42D 25/29, G03H 1/08, G03H 1/00

(54) **VERFAHREN ZUM ERZEUGEN EINES GITTERBILDES, GITTERBILD UND SICHERHEITSDOKUMENT**
METHOD FOR PRODUCING A GRATING IMAGE, GRATING IMAGE AND SECURITY DOCUMENT
PROCEDE DE PRODUCTION D'UNE IMAGE QUADRILLEE, IMAGE QUADRILLEE ET DOCUMENT DE SECURITE

(30) Priorität: 12.06.2002 DE 10226115
(43) Veröffentlichungstag der Anmeldung: 13.04.2005
(73) Patentinhaber: Giesecke+Devrient Currency Technology GmbH, 81677 München (DE)
(72) Erfinder: KAULE, Wittich, 82275 Emmering (DE)
(74) Vertreter: Klunker IP Patentanwälte PartG mbB
(86) Internationale Anmeldenummer: PCT/EP2003/006081
(87) Internationale Veröffentlichungsnummer: WO 2003/106189

(56) Entgegenhaltungen:
- EP-A- 0 766 103
- WO-A1-94/28444
- WO-A2-98/38597
- DE-A- 4 243 905
- DE-A1- 4 343 387
- GB-A- 2 136 352
- US-A- 4 576 439
- US-B1- 6 369 919
- RAI-CHOUDHURY P: "Microlithography, Micromachining and Microfabrication" HANDBOOK OF MICROLITHOGRAPHY, MICROMACHINING, AND MICROFABRICATION. VOL. 1: MICROLITHOGRAPY, BELLIGHAM, SPIE, US, Bd. 1, 1997, Seiten 1-16, XP002251881 ISBN: 0-8194-2378-5
- SCHNABEL B ET AL: "FABRICATION AND APPLICATION OF SUBWAVELENGTH GRATINGS", PROCEEDINGS OF SPIE, S P I E - INTERNATIONAL SOCIETY FOR OPTICAL ENGINEERING, US, vol. 3008, 10 February 1997 (1997-02-10), pages 233-241, XP009031976, ISSN: 0277-786X, DOI: 10.1117/12.271418 ISBN: 978-1-62841-730-2
- KLEY E-B ET AL: "E-BEAM LITHOGRAPHY: A SUITABLE TECHNOLOGY FOR FABRICATION OF HIGH-ACCURACY 2D AND 3D SURFACE PROFILES", PROCEEDINGS OF SPIE, S P I E - INTERNATIONAL SOCIETY FOR OPTICAL ENGINEERING, US, vol. 2640, 23 October 1995 (1995-10-23), pages 71-80, XP009031977, ISSN: 0277-786X, DOI: 10.1117/12.222658 ISBN: 978-1-62841-730-2
- Christoph Haupt: "Computergenerierte Hologramme zur Strahlformung" In: "Computergenerierte Hologramme zur Strahlformung", 10 July 1996 (1996-07-10), Stuttgart, XP055242168, ISBN: 978-3-923560-25-7
- Anonymous: "Figuren und Formen nachzeichnen | Gitterbilder für Kinder", Raetseldino.de, 18 January 2016 (2016-01-18), pages 1-2, XP055242164, Internet Retrieved from the Internet: URL:http://www.raetseldino.de/malen-zeichn en.html [retrieved on 2016-01-18]

## Beschreibung

Die Erfindung betrifft ein Verfahren zum Erzeugen eines ein Gittermuster aufweisenden Gitterbildes, bei dem mit Hilfe einer Schreibvorrichtung das Gittermuster auf der Oberfläche eines Substrats ausgebildet wird.

Die Erfindung betrifft ferner ein Gitterbild und ein Sicherheitsdokument, wie Banknoten, Ausweiskarten oder dergleichen, mit einem solchen Gitterbild.

Hologramme, holographische Gitterbilder und weitere optisch variable Beugungsstrukturen werden als Sicherheitselemente gegen Fälschungen bei Kreditkarten, Banknoten, Produktverpackungen und dergleichen verwendet. Im Allgemeinen beginnt die Herstellung dieser Beugungsstrukturen mit der Belichtung einer lichtempfindlichen Schicht durch überlagerte, kohärente Lichtstrahlen.

Echte Hologramme entstehen, indem ein Objekt mit kohärentem Laserlicht beleuchtet wird, wobei von dem Objekt gestörtes Laserlicht mit einem ungestörten Referenzstrahl in der lichtempfindlichen Schicht überlagert wird.

Holographische Beugungsgitter entstehen, wenn die in der lichtempfindlichen Schicht überlagerten Lichtstrahlen aus räumlich ausgedehnten, einheitlichen, kohärenten Wellenfeldern bestehen. Wenn man diese auf die lichtempfindliche Schicht, z.B. einen photographischen Film oder eine Photoresistschicht einwirken lässt, entsteht ein holographisches Beugungsgitter, das z.B. in einem photographischen Film als helle und dunkle Linien oder in einer Photoresistschicht als Berge und Täler konserviert wird. Da die Lichtstrahlen in diesem Falle durch kein Objekt gestört werden, ergibt sich lediglich ein optisch variabler Farbeffekt, jedoch keine Bilddarstellung. Holographische Gitterbilder lassen sich aus holographischen Beugungsgittern erzeugen, wenn nicht die gesamte Fläche des lichtempfindlichen Materials mit einem einheitlichen holographischen Beugungsgitter belegt wird, sondern wenn Masken verwendet werden, so dass nur Teile der Aufnahmefläche mit einem einheitlichen Gittermuster belegt werden, während andere Teile der Aufnahmefläche über andere Masken mit anderen Gittermustern belegt werden können. Ein holographisches Gitterbild setzt sich somit aus mehreren Gitterfeldern mit unterschiedlichen Beugungsgittermustern zusammen. Mit einem aus der Summe der Gitterfelder gebildeten Gitterbild lassen sich unterschiedlichste Bildmotive darstellen.

Üblicherweise handelt es sich bei den Beugungsgittern eines holographischen Gitterbildes um Strichgitter mit einer Vielzahl von nebeneinander liegenden Gitterlinien. Die Beugungsgitter eines jeden Gitterfelds bzw. Bildfelds des Gitterbilds sind dabei jeweils durch die Gitterkonstante, den Azimutwinkel und die Kontur oder den Umriss gekennzeichnet. Die Gitterkonstante entspricht dabei dem Abstand der Gitterlinien und der Azimutwinkel beschreibt die Neigung der Gitterlinien bezüglich einer Referenzrichtung. Die Gitterkonstante und der Azimutwinkel werden durch die Wellenlänge und Einfallsrichtung der belichtenden Wellenfelder eingestellt. Die Umrisse der Bildfelder werden mit Hilfe von Masken erzeugt.

Die Gitterkonstanten der Gittermuster in den einzelnen Bildfeldern sind wesentlich für die Farben im Gitterbild, während die Azimutwinkel der Gittermuster in den Bildfeldern für die Sichtbarkeit dieser Bildfelder in bestimmten Richtungen verantwortlich sind. Auf der Grundlage dieser Technik können daher optisch variable Bilder, z. B. bewegte Bilder oder auch plastisch wirkende Bilder, erzeugt werden.

Ganz allgemein lässt sich festhalten, dass ein echtes Hologramm eine Überlagerung von holographischen Beugungsgittern ist, wohingegen in einem holographischen Gitterbild mehrere holographische Beugungsgitter nebeneinander angeordnet sind. Im Allgemeinen wirken echte Hologramme im Vergleich zu Gitterbildern photographisch-lebensecht. Gitterbilder können dagegen graphisch gestaltet werden. Außerdem sind Gitterbilder lichtstärker als echte Hologramme, da die nebeneinander liegenden ungestörten Beugungsgitter intensiver leuchten als die überlagerten gestörten Beugungsgitter.

Die nebeneinander liegenden Beugungsgitter können holographisch auf verschiedene Weise hergestellt werden. Zum einen ist es möglich, das Gitterbild in großflächige Bildfelder aufzuteilen und dafür deckende Masken zu entwickeln, die jeweils nur eine Belichtung eines Bildfelds mit einem einheitlichen holographischen Beugungsgitter zulassen. Zum anderen kann das gesamte Gitterbild jedoch auch in eine Vielzahl von kleinen, nahezu punktförmigen Bereichen zerlegt werden, wobei diese Punktbereiche einen Durchmesser von 10 bis 200 Mikrometer haben. In den Punktbereichen können dann mit Hilfe einer Dot-Matrix-Maschine holographische Beugungsgitter ausgebildet werden.

Insbesondere bei fein strukturierten Gitterfeldern mit unterschiedlichen Gitterdaten ist die Maskentechnik umständlich in der Handhabung. Denn die Masken müssen beim Belichten in sehr engen Kontakt mit der lichtempfindlichen Schicht gebracht und sehr genau positioniert werden, was handwerkliches Geschick und Fingerfertigkeit erfordert.

Auch die Herstellung der in Punktbereiche zerlegten Gitterbilder ist nicht unproblematisch. Zwar können die in Punktbereiche zerlegten Gitterbilder automatisch maschinell und ohne handwerkliches Geschick hergestellt werden, aber dafür wird die Intensität des reflektierten Lichts durch die Zwischenräume zwischen den Punktbereichen gemindert. Darüber hinaus werden die Farben des reflektierten Lichts verfälscht, da die Gitter kleinflächig zusammengesetzt und nicht großflächig einheitlich sind. Weitere Nachteile sind die Erkennbarkeit der Punktzerlegung unter der Lupe sowie der geringe Sicherheitswert, da Dot-Matrix-Maschinen leicht verfügbar sind.

Darüber hinaus ist es bekannt, die Punktbereiche eines quasi aufgerasterten Gitterbildes mittels eines Elektronenstrahls zu erzeugen. Die vorgenannten, mit der Punktzerlegung des Gitterbildes verbundenen Nachteile treffen aber in identischer Weise auch auf diese Herstellungsvariante zu.

Weiterer Stand der Technik ist aus den Druckschriften DE 42 43 905 A sowie KLEY E-B ET AL: "E-BEAM LITHOGRAPHY: A SUITABLE TECHNOLOGY FOR FABRICATION OF HIGH-ACCURACY 2D AND 3D SURFACE PROFILES", PROCEEDINGS OF SPIE, SPIE-INTERNATIONAL SOCIETY FOR OPTICAL ENGINEERING, US, Bd. 2640, 23. Oktober 1995 (1995-10-23), Seiten 71-80, sowie aus der WO 94/28444 A1 bekannt.

Ausgehend von diesem Stand der Technik liegt der Erfindung die Aufgabe zugrunde, ein Verfahren zum Erzeugen von Gitterbildern anzugeben, das zu optisch variablen Gitterbildern hoher Lichtstärke führt, für den Hersteller von Gitterbildern zuverlässig durchführbar ist und den Zugang für Nachahmer erschwert, indem es keine Zerlegung der Gitterbilder in Punktbereiche verwendet.

Ferner liegt der Erfindung die Aufgabe zugrunde, ein einfach herstellbares, optisch variables Gitterbild und ein Sicherheitsdokument mit einem solchen Gitterbild zu schaffen.

Diese Aufgabe wird durch ein Verfahren, ein Gitterbild und ein Sicherheitselement mit den Merkmalen der unabhängigen Patentansprüche gelöst. In davon abhängigen Ansprüchen sind vorteilhafte Ausgestaltungen und Weiterbildungen der Erfindung angegeben.

Die Erfindung ermöglicht es nun, auch große, mit bloßem Auge erkennbare Flächen eines Gitterbildes mit einem einheitlichen Gitter zu belegen, und zwar auf einfache, nicht-holographische Weise, z. B. mittels einer fokussierten Strahlung, insbesondere einem Elektronenstrahl. Das heißt, ein darzustellendes Motiv wird in einzelne Bildfelder zerlegt, die eine visuell erkennbare Ausdehnung haben und diese Bildfelder werden mit einem einheitlichen Gitter belegt. Auf diese Weise kann die Lichtintensität des Gitterbildes erhöht werden, da es keine unbelichteten Zwischenräume gibt. Auch die Verfälschung der Farben entfällt, da die Felder großflächig einheitlich mit einem Gitter belegt sind und nicht aus kleinflächigen Punkten mit störenden Zwischenräumen zusammengesetzt sind.

Bei dem Verfahren werden zunächst Umrisslinien der Gitterfelder festgelegt, aus denen das Gitterbild besteht, und anschließend die Umrisslinien bzw. die Gitterfelder mit einem gewünschten Gittermuster gefüllt. Im einfachsten Fall besteht ein Gitterbild aus einem einzelnen Gitterfeld, das eine dem darzustellenden Motiv entsprechende Umrisslinie aufweist. Die Bestandteile des Gittermusters innerhalb der Umrisslinie werden dann durch Gitterkoordinaten beschrieben, die einer Schreibvorrichtung zugeführt werden. Bei der Schreibvorrichtung handelt es sich um eine Vorrichtung, die vorzugsweise mittels einer geeigneten Strahlung, insbesondere eines gebündelten Strahls, auf Grundlage der Gitterkoordinaten eine Zustandsänderung in einem strahlungsempfindlichen Substratmaterial herbeiführt, um so die Gitterfelder eines Gitterbildes in dem Substrat zu erzeugen.

Das Verfahren gemäß der Erfindung eignet sich insbesondere für die maschinelle automatische Erzeugung großflächiger Gitterfelder, da Umrisslinien für die Gitterfelder mithilfe von Computerprogrammen erstellt und mit Gittermustern gefüllt werden können. Computerprogramme sind auch in der Lage, zur Beschreibung der Gittermuster geeignete Gitterkoordinaten an eine Vorrichtung zur Bearbeitung des strahlungsempfindlichen Materials auszugeben. Nach der Einrichtung eines Prozesses gemäß der Erfindung ist dem Hersteller eine wiederholte zuverlässige Durchführung des Verfahrens leicht möglich. Nachahmern ist dagegen der Zugang erschwert, da die Vorrichtungen, die das erfindungsgemäße Verfahren implementieren, nicht standardmäßig in dieser Kombination am Markt verfügbar und sehr teuer sind.

Hervorzuheben ist weiterhin, dass sich mit dem erfindungsgemäßen Verfahren lichtstarke Gitterbilder erzeugen lassen, da sich mit dem Verfahren nahezu beliebig große Gitterfelder erzeugen lassen.

Bei einer bevorzugten Ausführungsform handelt es sich bei dem Gittermuster um ein Strichgitter, wobei die Schnittpunkte der Gitterlinien mit der Umrisslinie jeweils Anfangs- und Endpunkte der jeweiligen Gitterlinie definieren, deren Koordinaten der Schreibvorrichtung zur Bearbeitung des lichtempfindlichen Materials zugeführt werden.

Die erfindungsgemäße Vorgehensweise gestattet ein strukturiertes Abspeichern der erzeugten Gitterkoordinaten, die bei Bedarf an die Schreibvorrichtung transferiert werden können.

Die Gitterkoordinaten in der Datei werden darüber hinaus vorzugsweise so angeordnet, dass die Koordinaten des Anfangspunkts einer Gitterlinie neben den Koordinaten des Anfangspunkts einer benachbarten Gitterlinie und die Koordinaten eines Endpunkts einer Gitterlinie neben den Koordinaten des Endpunkts einer benachbarten Gitterlinie liegen. Eine solche Anordnung der Gitterkoordinaten ist von Vorteil, denn beim Abarbeiten der auf diese Weise sortierten Gitterkoordinaten folgt der Strahl einer mäanderförmigen Linie, ohne lange Leerstrecken zurücklegen zu müssen.

Weiter von Vorteil ist es, wenn die Anfangs- und Endpunkte benachbarter Gitterlinien jeweils durch Umkehrstrecken verbunden sind, so dass der Strahl auch zwischen den Gitterlinien keine Leerstrecke durchfährt. In diesem Fall braucht der Strahl nicht zwischen den Gitterlinien abgeschaltet zu werden.

Zur weiteren Erhöhung der Schreibgeschwindigkeit des Strahls können die Umkehrstrecken auch verrundet ausgebildet werden.

Die Erfindung ist jedoch nicht auf die Verwendung von Strichgittern als Gittermuster beschränkt. Statt gerader Gitterlinien können auch geschwungene, wellenförmige oder beliebige andere nicht geradlinige Gittermuster verwendet werden. In diesem Fall genügt es nicht, die Koordinaten der Schnittpunkte der das Gittermuster bildenden Gitterlinien mit der Umrisslinie als Anfangs- und Endpunkte zu speichern. Es müssen darüber hinaus Informationen bezüglich des Verlaufs der Gitterlinien innerhalb der Umrisslinie zur Verfügung gestellt werden. Hierfür können die Koordinaten von beliebig vielen Zwischenpunkten verwendet werden, die als Polygonzug die Form der Gitterlinie beschreiben. Alternativ kann die Form der Gitterlinie auch als Bezier-Kurve beschrieben werden, bei welcher lediglich die Koordinaten weniger Zwischenpunkte und zusätzlich eine Tangentialrichtung bezüglich des weiteren Kurvenverlaufs gespeichert werden.

Der Elektronenstrahl als Lithographieinstrument erlaubt sehr feine Auflösungungen bis in den Nanometer-Bereich. Deswegen wird er erfindungsgemäß bevorzugt. In Fällen, in welchen Gittermuster geschrieben werden sollen, ohne dass diese hohe Auflösung benötigt wird, kommen auch andere Lithographieinstrumente infrage, um die erfindungsgemäßen Gitterlinien in ein Substrat einzubringen. Hierbei kann es sich beispielsweise um eine mechanische Gravur mit einer Präzisionsfräsvorrichtung oder einen fokussierten UV-Laser handeln. Erfindungsgemäß können alle Lithographieinstrumente eingesetzt werden, die es erlauben, aus den beschriebenen Datensätzen Striche bzw. Linien zu ziehen, die jeweils von einem Anfangspunkt bis zu einem Endpunkt in genügend feiner Strichstärke in ein geeignetes Substrat eingeschrieben werden.

Die erfindungsgemäßen Gitterbilder können in beliebig geformte Prägestempel umgesetzt werden, die anschließend zur Prägung einer beliebigen prägbaren Schicht, wie beispielsweise einer thermoplastischen Schicht oder einer Lackschicht, insbesondere einer UV-härtbaren Lackschicht verwendet werden. Diese prägbare Schicht befindet sich vorzugsweise auf einem Träger, wie einer Kunststofffolie. Je nach Verwendungszweck der Kunststofffolie kann diese zusätzliche Schichten oder Sicherheitsmerkmale aufweisen. So kann die Folie als Sicherheitsfaden oder Sicherheitsetikett eingesetzt werden. Alternativ kann die Folie als Transfermaterial, wie beispielsweise in Form einer Heißprägefolie, ausgestaltet sein, die zum Übertrag einzelner Sicherheitselemente auf zu sichernde Gegenstände dient.

Die erfindungsgemäßen Gitterbilder werden vorzugsweise zur Absicherung von Wertdokumenten, wie Banknoten, Ausweiskarten, Pässen und dergleichen, benutzt. Selbstverständlich können sie auch für andere zu sichernde Waren, wie CDs, Bücher, etc., eingesetzt werden.

Gemäß der Erfindung ist es auch nicht unbedingt notwendig, das gesamte Gitterbild aus Gitterfeldern gemäß der Erfindung zusammenzusetzen. Vielmehr können auch nur Teile eines Gesamtbildes in Form der erfindungsgemäßen Gitterfelder ausgeführt sein, während andere Bildanteile mit anderen Verfahren gestaltet werden, wie beispielsweise holographischen Gittern oder echten Hologrammen oder einfachen Aufdrucken.

Nachfolgend wird die Erfindung anhand der beigefügten Zeichnungen im Einzelnen erläutert. Es sei darauf hingewiesen, dass die Figuren keine maßgetreue Darstellung der Erfindung bieten, sondern lediglich der Veranschaulichung dienen. Es zeigen:
- Figur 1: ein einfaches Gitterbild mit rautenförmigem Umriss;
- Figur 2: ein Gitterbild, das aus großflächigen Gitterfeldern zusammengesetzt ist;
- Figur 3: einen Ausschnitt B aus dem Gitterbild gemäß Figur 2, das im DotMatrix-Verfahren gemäß dem Stand der Technik hergestellt wurde;
- Figur 4: einen Umriss eines erfindungsgemäßen Gitterfeldes;
- Figur 5: ein Gittermuster, mit dem der Umriss aus Figur 4 gefüllt werden soll;
- Figur 6: eine Überlagerung des Gittermusters aus Figur 5 mit der Umrisslinie aus Figur 4;
- Figur 7: ein Gitterfeld, dessen Gitterlinien durch Anfangs- und Endpunkte beschrieben sind;
- Figur 8: ein Bearbeitungsweg für das Gitterfeld aus Figur 7;
- Figur 9: ein fertiges Gitterbild;
- Figur 10: ein weiterer abgewandelter Bearbeitungsweg für das Gitterfeld aus Figur 7;
- Figur 11: der Bearbeitungsweg aus Figur 8 ohne Leerstrecken zwischen benachbarten Gitterlinien;
- Figur 12: ein noch weiterer abgewandelter Bearbeitungsweg ohne Leerstrecken zwischen benachbarten Gitterlinien;
- Figur 13.: Überlagerung eines wellenlinienförmigen Gittermusters mit der Umrisslinie aus Fig. 4; und
- Figur 14: Gitterfeld, dessen Gitterlinien durch Anfangs- und Endpunkte sowie Zwischenpunkte beschrieben sind.

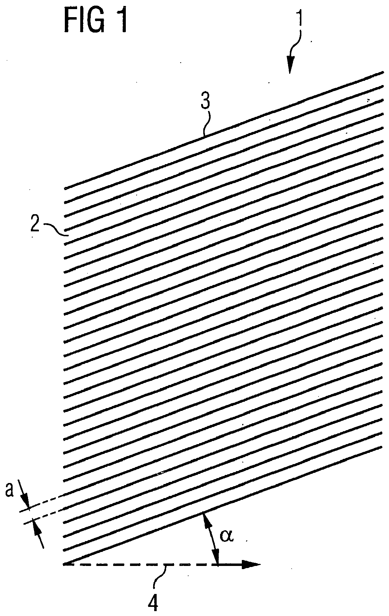

In Figur 1 ist ein Gitterbild 1 dargestellt, das aus einem einzelnen rautenförmigen Gitterfeld 2 besteht. Das Gitterfeld 2 ist mit einem Gittermuster ausgefüllt, das eine Vielzahl von nebeneinander angeordneten Gitterlinien 3 aufweist, die in einem Abstand a voneinander entfernt angeordnet sind. Der Abstand a wird auch als Gitterkonstante bezeichnet. Außerdem nehmen die Gitterlinien 3 einen Azimutwinkel α zu einer Referenzrichtung 4 ein. Die Gitterkonstante ist wesentlich für die Farbe des Gitterfelds, während der Azimutwinkel α für die Sichtbarkeit des Gitterfeldes 2 in bestimmten Betrachtungsrichtungen verantwortlich ist.

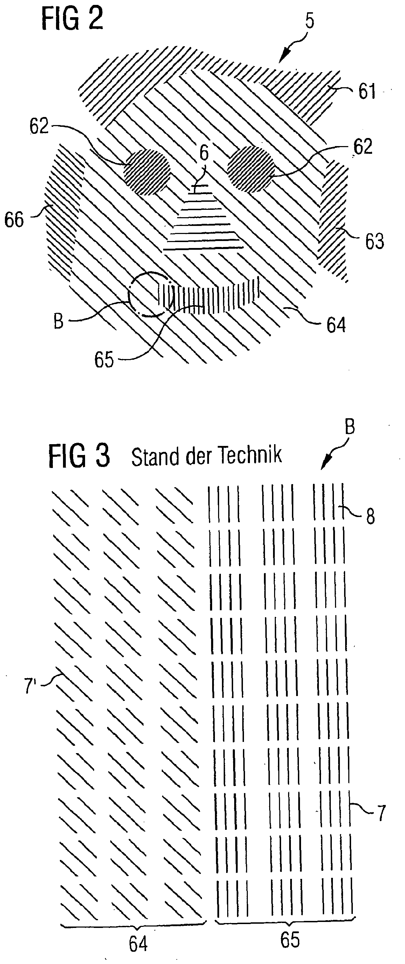

In Figur 2 ist ein weiteres Gitterbild 5 dargestellt, das aus einer Vielzahl von Gitterfeldern 6, 61, 62, 63, 64, 65, 66 zusammengesetzt ist. Direkt aneinander grenzende Gitterfelder unterscheiden sich wenigstens in einem Gitterparameter, wie z.B. der Gitterkonstante a oder dem Azimutwinkel α, was in der Figur durch die unterschiedlichen Schraffuren veranschaulicht wird. Nicht direkt aneinander grenzende Gitterfelder können durchaus mit gleichen Gittermustern belegt werden. Diese Gitterfelder sind unter dem gleichen Betrachtungswinkel mit der gleichen Farbe visuell erkennbar. Im gezeigten Beispiel ist dies für die Gitterfelder 62 der Fall, welche die Augen des Gesichts darstellen. Sie werden daher auch mit der gleichen Schraffur belegt.

Gitterbilder, wie das in Figur 2 dargestellte Gitterbild 5, werden im Stand der Technik mit Hilfe von Masken und einer holographischen Belichtungstechnik hergestellt, indem räumlich ausgedehnte, einheitlich kohärente Wellenfelder in einer lichtempfindlichen Schicht überlagert werden. Dabei werden jeweils nur diejenigen Gitterfelder belichtet, die die gleiche Gitterkonstante a und den gleichen Azimutwinkel α aufweisen.

Wird für die Herstellung des Gitterbildes 5 das bekannte Dot-Matrix-Verfahren verwendet, so wird jedes Gitterfeld 6, 61, 62, 63, 64, 65, 66 aus einer Vielzahl von Punktbereichen 8 zusammengesetzt, wie sie in Figur 3 dargestellt sind. In Figur 3 ist stark vergrößert der Bereich B aus Figur 2 dargestellt, für den Fall, dass das Gitterbild 5 im Dot-Matrix-Verfahren hergestellt wurde. Es wird die Grenze zwischen zwei Gitterfeldern 64, 65 gezeigt, die mit unterschiedlichen Gittermustern 7,7' belegt sind, um unterschiedliche visuelle Eindrücke zu erzeugen. Hier wird jedoch nicht der gesamte Bereich eines Gitterfeldes 64, 65 mit dem jeweiligen Gittermuster 7, 7' versehen, sondern lediglich die Punktbereiche 8. Die in den Punktbereichen 8 angeordneten Gittermuster 7, 7' werden entweder auf holographischem Wege durch die Überlagerung von kohärenten Wellenfeldern erzeugt oder mit Elektronenstrahl geschrieben. Diese Punktbereiche 8 sind durch nicht beugende Zwischenbereiche voneinander getrennt. Wie bereits erwähnt, führen diese Zwischenbereiche zu einer Minderung der Lichtintensität, d.h. das Gitterfeld bzw. das Gitterbild erscheint weniger brillant. Werden die Punktbereiche direkt aneinander gesetzt, so müssen sie aufgrund der Fertigungstoleranzen überlappend angeordnet werden. Auch diese Überlagerung führt zu sichtbaren Störeffekten, wie Farbverfälschungen.

Gemäß der Erfindung wird jedes der Gitterfelder 6, 61, 62, 63, 64, 65, 66 des Gitterbildes 5 in sich einheitlich mit einem durchgehenden Gittermuster belegt, das mit Hilfe eines steuerbaren Licht- oder Teilchenstrahls, insbesondere eines Elektronenstrahls, erzeugt wird.

Im Folgenden wird das Verfahren zur Erzeugung der erfindungsgemäßen Gitterfelder 6, 61, 62, 63, 64, 65, 66 erläutert.

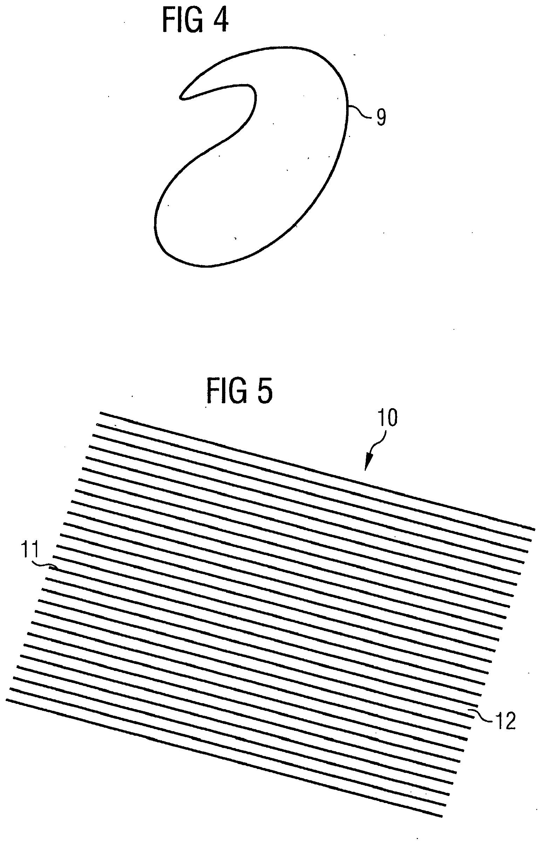

In einem ersten Verfahrensschritt wird gemäß Figur 4 eine Umrisslinie 9, die der Umrisslinie des späteren Gitterfeldes 6, 61, 62, 63, 64, 65, 66 entspricht, erstellt. Dazu kann auf handelsübliche Zeichenprogramme, wie beispielsweise Adobe-Illustrator, Macromedia-Freehand, Corel-Draw oder dergleichen zurückgegriffen werden. Umrisslinien 9 bzw. Gitterfelder 6, 61, 62, 63, 64, 65, 66, die mit unterschiedlichen Gittermustern gefüllt werden sollen, werden vorzugsweise separat, z.B. in verschiedenen Ebenen des Zeichenprogramms oder in verschiedenen Dateien erstellt. Um die Übersichtlichkeit der von den Umrisslinien 9 angedeuteten Zeichnung zu erhöhen, können in den Umrisslinien 9 liegende Flächen im Zeichenprogramm in unterschiedlichen Farben eingefärbt werden.

In einem weiteren Verfahrensschritt wird in dem Zeichenprogramm ein Gittermuster 10 erzeugt, wie es beispielsweise in Figur 5 dargestellt ist. In Figur 5 setzt sich das Gittermuster 10 aus einer Vielzahl von Schraffurlinien 11 zusammen, die den späteren Gitterlinien entsprechen. Da gängige Zeichenprogramme nicht im Mikrometerbereich oder darunter arbeiten und der Abstand zwischen den tatsächlichen Gitterlinien typischerweise im Bereich zwischen 0,5 und 2 Mikrometer liegt, wird das Gittermuster 10 vergrößert gezeichnet. Die Vergrößerung kann beispielsweise 10-fach, 100-fach oder 1000-fach sein. Das so erstellte Gittermuster 10 sieht im Computerbild wie eine Schraffur aus, die sich über einen Zeichenbereich 12 erstreckt.

Das Gittermuster kann aber auch aus wellenförmigen oder beliebig anders geformten Gitterlinien bestehen. Im Zeichenprogramm werden diese Gitterlinien, wie bereits erwähnt, beispielsweise als Polygonzüge oder Bezier-Kurven beschrieben.

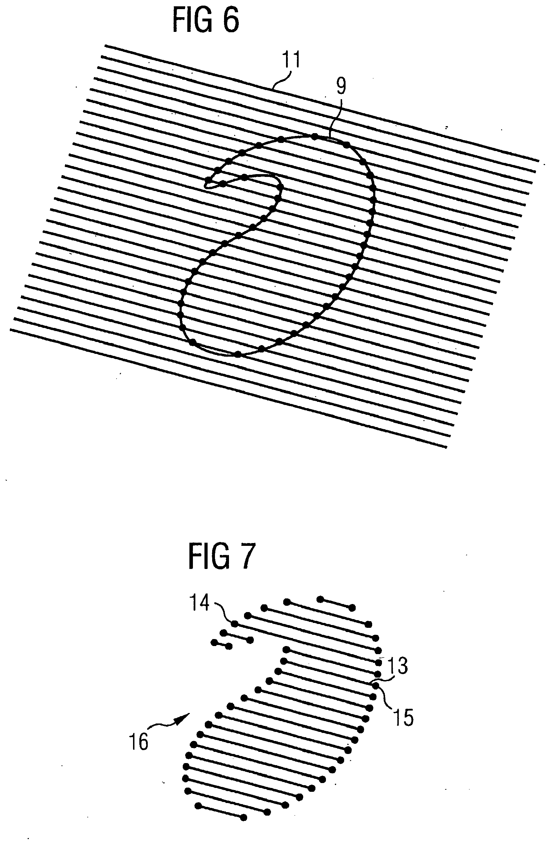

Nun werden gemäß Figur 6 Werkzeuge aus dem Zeichenprogramm angewandt, welche es gestatten, die im ersten Verfahrensschritt erzeugte Umrisslinie 9, die im gleichen Maßstab vergrößert ist wie das Gittermuster, mit dem Gittermuster 10 so zu verknüpfen, dass das Gittermuster 10 nur innerhalb der Umrisslinien 9 erhalten bleibt.

Dadurch entstehen die in Figur 7 dargestellten Gitterlinien 13, die jeweils durch einen Anfangspunkt 14 und einen Endpunkt 15, d. h. den Schnittpunkten der Gitterlinien 13 mit der Umrisslinie 9, definiert sind und zusammen ein Gitterfeld 16 bilden. Es ist darauf zu achten, dass möglichst nur die Gitterlinien 13 stehen bleiben und alle Umrisslinien 9 entfernt sind.

Die Datei des Zeichenprogramms wird nun in ein übliches objektorientiertes Format transformiert, in welchem Geradenstücke durch ihre Anfangs- und Endpunkte beschrieben werden. Jede Gitterlinie 13 wird nun durch einen Anfangspunkt 14 und einen Endpunkt 15 beschrieben. Ein geeignetes objektorientiertes Format ist z.B. das EPS-(Encapsulated Postscript) Format.

Für den Fall, dass die Gitterlinien nicht geradlinig sind, wird nach dem gleichen Verfahren vorgegangen. Für eine eindeutige Charakterisierung der in der Umrisslinie 9 liegenden Teilstücke des Gittermusters genügen in diesem Fall jedoch nicht allein die Schnittpunkte. Die die Gitterlinien beschreibenden mathematischen Funktionen sind hierbei zu berücksichtigen.

Falls das Zeichenprogramm keine Werkzeuge zum Verknüpfen des Gittermusters 10 mit der Umrisslinie 9 enthält, kann wie folgt verfahren werden:
In einem selbst geschriebenen Programm, z.B. in Visual C++, werden die Schraffurlinien 11 im gewünschten Abstand und im gewünschten Neigungswinkel erzeugt. Die Umrisslinie 9 aus einer Datei in EPS-Format wird als Polygonzug in das selbst geschriebene Programm eingelesen. Die Schnittpunkte der Schraffurlinien 11 mit der Umrisslinie 9 sind die Anfangspunkte 14 und Endpunkte 15 der Gitterlinien 13, die in den folgenden Verfahrensschritten benötigt werden.

Die Datei in EPS-Format mit den Objektdaten der Anfangspunkte 14 und der Endpunkte 15 muss nun aufbereitet werden. Im Einzelnen müssen die Objekte der Anfangspunkte 14 und der Endpunkte 15 auf den richtigen Maßstab gebracht und in einer geeigneten Reihenfolge angeordnet werden.

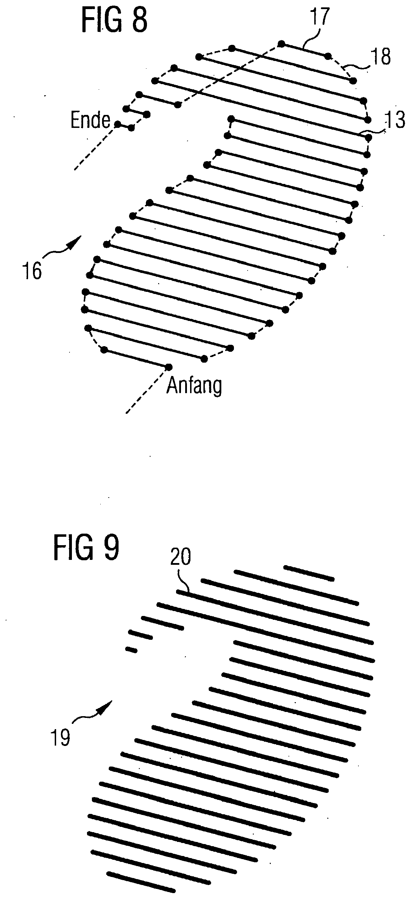

Mit einem geeigneten Suchprogramm lassen sich in der Datei in EPS-Format die Objektdaten der Anfangspunkte 14 und der Endpunkte 15 finden. Dabei stellt man im Allgemeinen fest, dass diese Objektdaten ziemlich ungeordnet abgespeichert sind. Man schreibt daher ein Programm, das zu jedem Anfangspunkt 14 oder Endpunkt 15 einer Gitterlinie 13 den nächstgelegenen Anfangspunkte 14 oder Endpunkt 15 einer weiteren Gitterlinie 13 findet und ordnet die Gitterlinien in dieser Reihenfolge an. Wenn man nun bei jeder zweiten Gitterlinie 13 den Anfangspunkt 14 und den Endpunkt 15 vertauscht, dann ergibt sich ein in Figur 8 dargestellter mäanderförmiger Bearbeitungsweg 17. Denn die Gitterlinien 13 sind durch in Figur 8 gestrichelt eingezeichnete Leerstrecken 18 mäanderförmig untereinander verbunden.

Weiterhin bringt man die Objektdaten der Anfangspunkte 14 und der Endpunkte 15 auf den gewünschten Maßstab. Falls beispielsweise beim Zeichnen um einen Faktor 1000 vergrößert wurde, interpretiert man die Millimeterangaben im Datensatz als Mikrometerangaben.

Nunmehr stehen Datensätze zur Verfügung, die nur aus den Anfangspunkten 14 und den Endpunkten 15 der Gitterlinien 13 bestehen. Die Gitterlinien 13 sollen in eine Elektronenstrahl-Lithographie-Maschine geschrieben werden, die im so genannten CPC (Continuous Path Control) -Modus arbeitet. Dies ist ein Modus, bei dem die durch Anfangspunkte 14 und Endpunkte 15 gekennzeichneten Gitterlinien 13 durchgehend geschrieben werden können, im Gegensatz zum meistens verwendeten, so genannten "Stitching", bei dem alle Bildbestandteile, also auch die Linien, in kleine Elemente zerlegt werden.

Als Substrat lässt sich z.B. eine Quarzglasplatte verwenden, die mit einer dünnen Chromschicht versehen ist und auf die eine Photoresistschicht aufgebracht ist. Die Photoresistschicht ist so dick, wie es die gewünschte Tiefe des Bilderreliefs erfordert. Vorzugsweise beträgt die Dicke der Photoresistschicht einige 100 Nanometer. Das Substrat und die erstellten Datensätze werden der Elektronenstrahl-Lithographie-Maschine zugeführt und der Lithographieprozess gestartet. Nachdem alle Datensätze des Gitterbilds abgearbeitet sind, wird das Substrat aus der Maschine entnommen und die Photoresistschicht entwickelt. Als Endergebnis erhält man das gewünschte Gitterbild als Berg- und Tal-Profil auf der Quarzglasplatte.

Der Photoresist-Master wird nun in der üblichen Weise wie bei der optischen Holographie weiter verarbeitet. Zunächst wird eine dünne Silberschicht auf die Photoresistschicht durch Bedampfen oder chemischen Niederschlag aufgetragen. Anschließend wird in einem Galvanikbad eine Nickelabformung vom Photoresist-Master erzeugt, vervielfacht und als Prägestempel zum Prägen einer Prägeschicht verwendet. Ein derartiges geprägtes Gitterbild 19 ist in Figur 9 dargestellt. Dabei sind Vertiefungen 20 in der Prägeschicht durch dunkle Linien dargestellt. Je nach Herstellungsverfahren können die dunklen Linien jedoch auch Erhöhungen darstellen. Die fertig geprägte Prägeschicht wird schließlich auf das endgültige Substrat, z.B. eine Banknote, Kreditkarte oder Verpackungsmaterial, transferiert. Die Prägeschicht befindet sich hierbei entweder auf dem endgültigen Substrat oder bildet dieses Substrat. Dies kann beispielsweise bei Folien der Fall sein, die später in Ausweiskarten, Banknoten oder Sicherheitselemente, wie Sicherheitsfäden oder Etiketten, geschnitten werden. Alternativ kann die Prägeschicht auch auf einem Zwischenträger, wie einem Transfermaterial, angeordnet sein. Vorzugsweise handelt es sich bei dem Transfermaterial um eine Heißprägefolie. Sie besteht im einfachsten Fall aus einer Trägerfolie, auf die eine thermoplastische Schicht oder eine Lackschicht, vorzugsweise eine UVhärtbare Lackschicht, aufgebracht ist. In diese Lackschicht bzw. thermoplastische Schicht wird mithilfe des erfindungsgemäßen Prägestempels das Gitterbild übertragen. Anschließend wird die Prägeschicht mit einer metallischen oder dielektrischen Schicht versehen, die dafür sorgt, dass das Gitterbild in Reflexion beobachtet werden kann. Anschließend wird der Schichtaufbau mit einer Kleberschicht versehen, die beim Übertrag mit dem Endsubstrat bzw. einem zu sichernden Gegenstand in Kontakt gebracht wird. Nach dem Übertrag wird die Trägerfolie vorzugsweise abgezogen.

Alle Ausführungsformen des Sicherheitselements, Sicherheitsdokuments, Sicherheitspapiers oder anderer zu sichernder Gegenstände können neben dem erfindungsgemäßen Gitterbild weitere Sicherheitsmerkmale, wie maschinell lesbare Schichten oder andere visuell prüfbare Merkmale aufweisen.

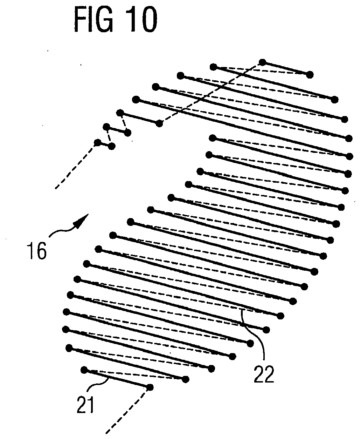

Der in Figur 8 dargestellte mäanderförmige Bearbeitungsweg 17 wird gegenüber einem in Figur 10 dargestellten natürlichen Bearbeitungsweg 21, der in Zick-Zack-Form verläuft, im Allgemeinen bevorzugt. Insbesondere sind die Leerstrecken, in denen der Elektronenstrahl inaktiv ist, bei dem mäanderförmigen Bearbeitungsweg 17 optimal verkürzt. Gelegentlich kann jedoch auch der in Figur 10 dargestellte natürliche Bearbeitungsweg von Vorteil sein, wenn beispielsweise die Schreibvorrichtung zu Kühlzwecken zwischen zwei Schreibvorgängen abgeschaltet werden muss. Da der natürliche Bearbeitungsweg 21 in Zick-Zack-Form über lange Leerstrecken 22 verfügt, kann die Abschaltung entlang den Leerstrecken 22 durchgeführt werden.

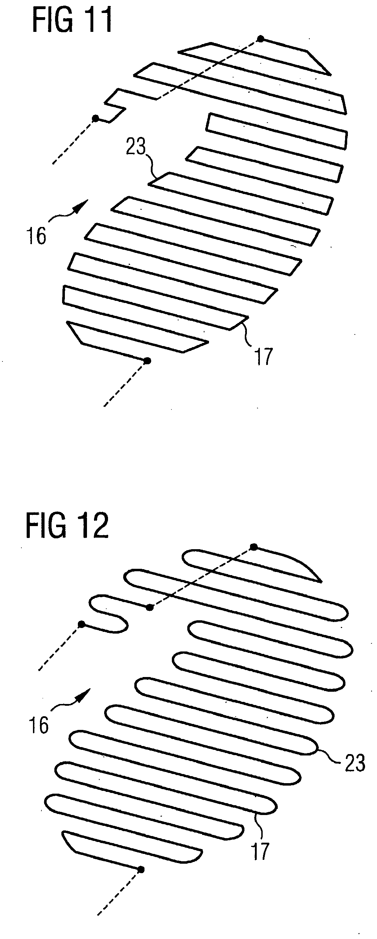

Ein weiterer Vorteil des mäanderförmigen Bearbeitungswegs 17 ist, dass der Elektronenstrahl entlang den kurzen Leerstrecken 18 am Rand des Gitterfelds 16 nicht deaktiviert werden muss, da am Rande des Gitterfeldes 16 angeordnete kurze Verbindungsstücke 23 die optische Funktion des Gitterfelds 16 nicht beeinträchtigen. Daher kann mit dem Elektronenstrahl auch der in Figur 11 dargestellte Bearbeitungsweg 17 in der Form eines weitgehend durchgehenden Polygonzugs geschrieben werden.

Zur weiteren Erhöhung der Schreibgeschwindigkeit können die Ecken der Verbindungsstücke 23 auch verschliffen oder abgerundet werden. Ein entsprechend modifizierter Bearbeitungsweg 17 ist in Figur 12 dargestellt.

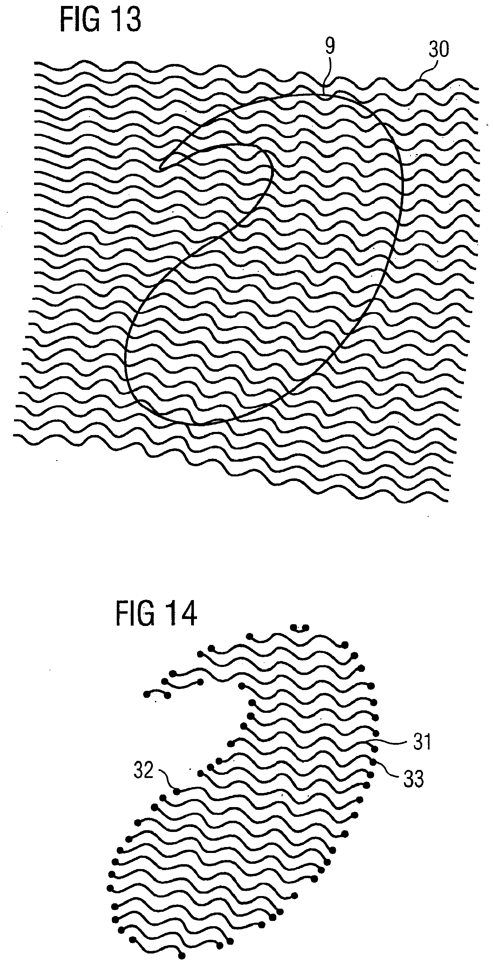

Die Figuren 13 und 14 sind analog zu den Figuren 6 und 7 zu verstehen, wobei das mit der Umrisslinie 9 überlagerte Gittermuster 30 nicht aus geraden Linien 11 besteht, sondern aus wellenförmigen Gitterlinien 31. Die Gitterlinien 31 des Gittermusters 30 sind zudem so angeordnet, dass der Gitterabstand entlang einer Gitterlinie 31 von links nach rechts zunimmt, wie aus Figur 13 ersichtlich. Das Gittermuster 30 bzw. die einzelnen Gitterlinien 31 werden dabei, wie bereits erläutert, durch Polygonzüge oder Bezier-Kurven beschrieben.

Analog zu dem im Zusammenhang mit den Figuren 6 und 7 erläuterten Verfahren werden auch hier die Schnittpunkte 32, 33 der einzelnen Gitterlinien 31 mit der Umrisslinie 9 bestimmt. Im Gegensatz zu den geradlinigen Gitterlinien genügen jedoch diese Schnittpunkte 32 und 33 nicht, um die Gitterlinien 31 vollständig zu beschreiben. Der zu diesem Gitterfeld gehörende Datensatz enthält daher neben den Koordinaten der Schnittpunkte 32 und 33 auch Koordinaten mehrerer oder vieler Zwischenpunkte innerhalb der Umrisslinie 9.

Es wird darauf hingewiesen, dass die Abbildungen rein schematisch sind und lediglich der Veranschaulichung dienen. In der Praxis liegen die Umrisslinien bzw. die Ausdehnung der Gitterfelder im Millimeter- und Zentimeter-Bereich. Die Gitterlinienabstände liegen im Mikrometer-Bereich und darunter. D.h., wenn in den Figuren einige wenige Gitterlinien gezeichnet sind, entspricht dies in der Praxis bis zu mehreren tausend Gitterlinien.

Der Elektronenstrahl als Lithographieinstrument erlaubt sehr feine Auflösungen bis in den Nanometerbereich. Deswegen wird er bevorzugt verwendet. In Fällen, in denen Gitter geschrieben werden sollen, ohne dass diese hohe Auflösung benötigt wird, kommen auch andere Lithographieinstrumente infrage, um die Gitterlinien 13 in einem Substrat auszubilden. Mögliche Verfahren sind eine mechanische Gravur mit einer Präzisionsfräsvorrichtung oder eine andere Materialabtragung, z. B. mit einem fokussierten UV-Laser. Grundsätzlich können alle Instrumente eingesetzt werden, die es erlauben, auf Grundlage der oben genannten Datensätze jeweils ausgehend von einem Anfangspunkt und an einem Endpunkt endend, Linien in genügend feiner Strichstärke in einem geeigneten Substrat zu ziehen. Solche Materialbearbeitungen hinterlassen in dem Substrat charakteristische Spuren, aufgrund welcher der Fachmann zumindest mittels eines Elektronenmikroskops erkennen kann, welcher Instrumenttyp zur Erzeugung der Linien in dem Substrat verwendet wurde.

## Patentansprüche

1. Verfahren zum Erzeugen eines Gitterbildes (16,19), das mehrere mit bloßem Auge separat erkennbare Gitterfelder (6,61, 62,63, 64,65, 66) aufweist, mit folgenden Schritten:
- Festlegen einer Umrisslinie (9) eines Gitterfeldes (6,61, 62,63, 64,65, 66),
- Füllen der Umrisslinie (9) mit einem einheitlichen Gittermuster (10) aus nicht unterbrochenen Gitterlinien, wobei das Gittermuster (10) innerhalb der Umrisslinie (9) durch Gitterkoordinaten beschrieben wird,
- Zuführen der Gitterkoordinaten an ein Lithographieinstrument und
- Erzeugen des Gittermusters (10) in einem Substrat durch durchgehendes Schreiben der Gitterlinien mit dem Lithographieinstrument und anhand der Gitterkoordinaten.

2. Verfahren nach Anspruch 1, **dadurch gekennzeichnet, dass** das Gittermuster (10) von nebeneinander angeordneten Gitterlinien (13) gebildet wird.

3. Verfahren nach Anspruch 2, **dadurch gekennzeichnet, dass** als Gitterkoordinaten die Schnittpunkte der Gitterlinien (13) mit der Umrisslinie (9) sowie gegebenenfalls innerhalb der Umrisslinie liegende Gitterpunkte des Gitterfeldes (6,61, 62,63, 64,65, 66) ausgewählt werden.

4. Verfahren nach einem der Ansprüche 1 bis 3, **dadurch gekennzeichnet, dass** mithilfe einer Datenverarbeitungsanlage die Umrisslinie des Gitterfeldes (6,61, 62,63, 64,65, 66) erstellt und mit dem Gittermuster (10) gefüllt wird.

5. Verfahren nach wenigstens einem der Ansprüche 1 bis 4, **dadurch gekennzeichnet, dass** die Gitterlinien geradlinig oder geschwungen sind.

6. Verfahren nach wenigstens einem der Ansprüche 1 bis 5, **dadurch gekennzeichnet, dass** die Gitterkoordinaten der Gitterlinien (13) sequentiell ihren räumlichen Anordnungen entsprechend sortiert werden.

7. Verfahren nach Anspruch 6, **dadurch gekennzeichnet, dass** die Koordinaten eines Anfangspunkts (14) einer Gitterlinie (13) jeweils neben den Koordinaten eines Anfangspunkts (14) einer benachbarten Gitterlinie (13) und die Koordinaten eines Endpunkts (15) einer Gitterlinie (13) jeweils neben den Koordinaten eines Endpunkts (15) einer weiteren benachbarten Gitterlinie (13) sortiert werden.

8. Verfahren nach Anspruch 7, **dadurch gekennzeichnet, dass** die Anfangs- und Endpunkte von nebeneinander liegenden Gitterlinien (13) zu einem mäanderförmigen Bearbeitungsweg (17) verbunden werden.

9. Verfahren nach einem der Ansprüche 1 bis 8, **dadurch gekennzeichnet, dass** das Lithographieinstrument mithilfe von Strahlung in einem strahlungs- empfindlichen Material eine Zustandsänderung herbeiführt.

10. Verfahren nach Anspruch 9, **dadurch gekennzeichnet, dass** das Lithographieinstrument entsprechend den Gitterkoordinaten über das strahlungsempfindliche Material geführt wird.

11. Verfahren nach Anspruch 9 oder 10, **dadurch gekennzeichnet, dass** als strahlungsempfindliches Material eine auf eine Substratplatte aufgebrachte Photoresistschicht verwendet wird.

12. Verfahren nach einem der Ansprüche 1 bis 11, **dadurch gekennzeichnet, dass** als Lithographieinstrument ein Elektronenstrahl verwendet wird.

13. Verfahren nach einem der Ansprüche 9 bis 12, **dadurch gekennzeichnet, dass** nach der herbeigeführten Zustandsänderung eine Metallisierungsschicht auf das strahlungsempfindliche Material aufgebracht wird und dass davon auf galvanischem Wege eine metallische Abformung erzeugt wird.

14. Verfahren nach Anspruch 13, **dadurch gekennzeichnet, dass** die Abformung als Prägestempel zum Prägen eines Gitterbildes in ein Substrat verwendet wird.

15. Gitterbild, welches mehrere mit bloßem Auge separat erkennbare Gitterfelder aufweist, in denen jeweils ein Gittermuster aus nicht unterbrochenen, durchgehend geschriebenen Gitterlinien angeordnet ist, welches mittels eines Lithographieinstruments erzeugt ist.

16. Gitterbild nach Anspruch 15, **dadurch gekennzeichnet, dass** als Lithographieinstrument fokussierte Lichtstrahlung oder ein fokussierter Teilchenstrahl, insbesondere ein Elektronenstrahl, verwendet wird.

17. Gitterbild nach wenigstens einem der Ansprüche 15 bis 16, **dadurch gekennzeichnet, dass** das Gitterbild weitere Bildanteile aufweist, die in einer anderen Technik erzeugt sind.

18. Gitterbild, nach wenigstens einem der Ansprüche 15 bis 17, **dadurch gekennzeichnet, dass** das Gittermuster aus Gitterlinien besteht, die ein Beugungsgitter bilden.

19. Gitterbild nach wenigstens einem der Ansprüche 15 bis 18, **dadurch gekennzeichnet, dass** die Gitterlinien (13) durch an ihren Enden (14,15) angeordnete Umkehrstücke (23) zu mindestens einer mäanderförmig verlaufenden Gitterlinie verbunden sind.

20. Gitterbild nach wenigstens einem der Ansprüche 15 bis 19, **dadurch gekennzeichnet, dass** die Umkehrstrecken (23) verrundet sind.

21. Sicherheitselement mit einem Gitterbild gemäß wenigstens einem der Ansprüche 15 bis 20.

22. Sicherheitselement nach Anspruch 21, **dadurch gekennzeichnet, dass** das Sicherheitselement ein Sicherheitsfaden, ein Etikett oder ein Transferelement ist.

23. Sicherheitspapier mit einem Gitterbild gemäß wenigstens einem der Ansprüche 15 bis 20.

24. Sicherheitspapier mit einem Sicherheitselement gemäß Anspruch 21 oder 22.

25. Sicherheitsdokument mit einem Gitterbild gemäß wenigstens einem der Ansprüche 15 bis 20.

26. Sicherheitsdokument mit einem Sicherheitselement gemäß Anspruch 21 oder 22.

27. Sicherheitsdokument mit einem Sicherheitspapier gemäß Anspruch 23 oder 24.

28. Transfermaterial, insbesondere Heißprägefolie mit einem Gitterbild gemäß Anspruch 15 bis 20.

29. Vorrichtung zum Erzeugen eines Gitterbildes, das mehrere mit bloßem Auge separat erkennbare Gitterfelder aufweist, mit folgenden Einrichtungen:
- Einrichtung zur Festlegung einer Umrisslinie des Gitterfeldes,
- Einrichtung zum Füllen der Umrisslinie mit einem einheitlichen Gittermuster aus nicht unterbrochenen Gitterlinien, wobei das Gittermuster innerhalb der Umrisslinie durch Gitterkoordinaten beschrieben wird,
- Einrichtung zum Zuführen der Gitterkoordinaten an ein Lithographieinstrument,
- Lithographieinstrument zum Erzeugen des Gittermusters in einem Substrat anhand der Gitterkoordinaten durch durchgehendes Schreiben der Gitterlinien.

30. Vorrichtung nach Anspruch 29, **dadurch gekennzeichnet, dass** das Lithographieinstrument ein Elektronenstrahl ist.

## Claims

1. A method for producing a grating image (16, 19) having several grating fields (6, 61, 62, 63, 64, 65, 66) which are recognizable separately with the naked eye, with the following steps of:
- defining a contour line (9) of a grating field (6, 61, 62, 63, 64, 65, 66),
- filling the contour line (9) with a uniform grating pattern (10) from uninterrupted grating lines, wherein the grating pattern (10) within the contour line (9) is described by grating coordinates,
- supplying the grating coordinates to a lithography instrument and
- producing the grating pattern (10) in a substrate by continuous writing of the grating lines with the lithography instrument and on the basis of the grating coordinates.

2. The method according to claim 1, **characterized in that** the grating pattern (10) is formed by grating lines (13) which are arranged side by side.

3. The method according to claim 2, **characterized in that** as grating coordinates there are selected the intersection points of the grating lines (13) with the contour line (9) and, optionally, grating points of the grating field (6, 61, 62, 63, 64, 65, 66) lying within the contour line.

4. The method according to any of claims 1 to 3, **characterized in that** with the aid of a data processing system the contour line of the grating field (6, 61, 62, 63, 64, 65, 66) is created and filled with the grating pattern (10).

5. The method according to at least one of claims 1 to 4, **characterized in that** the grating lines are straight or curved.

6. The method according to at least one of claims 1 to 5, **characterized in that** the grating coordinates of the grating lines (13) are sequentially sorted corresponding to their spatial arrangements.

7. The method according to claim 6, **characterized in that** the coordinates of a starting point (14) of a grating line (13) are sorted respectively side by side with the coordinates of a starting point (14) of a neighboring grating line (13) and the coordinates of an end point (15) of a grating line (13) respectively side by side with the coordinates of an end point (15) of a further neighboring grating line (13).

8. The method according to claim 7, **characterized in that** the starting points and end points of grating lines (13) lying side by side are connected to form a meandering processing path (17).

9. The method according to any of claims 1 to 8, **characterized in that** the lithography instrument causes a change of state in a radiation-sensitive material with the aid of radiation.

10. The method according to claim 9, **characterized in that** the lithography instrument is guided over the radiation-sensitive material in a manner corresponding to the grating coordinates.

11. The method according to claim 9 or 10, **characterized in that** as a radiation-sensitive material a photoresist layer applied onto a substrate plate is employed.

12. The method according to any of claims 1 to 11, **characterized in that** as the lithography instrument an electron beam is employed.

13. The method according to any of claims 9 to 12, **characterized in that** after the caused change of state a metallization layer is applied onto the radiation-sensitive material and that a metallic molding is galvanically produced therefrom.

14. The method according to claim 13, **characterized in that** the molding is employed as an embossing die for embossing a grating image into a substrate.

15. A grating image having several grating fields that are recognizable separately with the naked eye, in which there is arranged in each case a grating pattern from uninterrupted, continuously written grating lines, said grating pattern being produced by means of a lithography instrument.

16. The grating image according to claim 15, **characterized in that** as the lithography instrument focused light radiation or a focused particle beam, in particular an electron beam, is employed.

17. The grating image according to at least one of claims 15 to 16, **characterized in that** the grating image has further image parts, which are produced in a different technique.

18. The grating image according to at least one of claims 15 to 17, **characterized in that** the grating pattern is composed of grating lines which form a diffraction grating.

19. The grating image according to at least one of claims 15 to 18, **characterized in that** the grating lines (13) are connected by reversing sections (23) arranged at their ends (14, 15) to form at least one meandering grating line.

20. The grating image according to at least one of claims 15 to 19, **characterized in that** the reversing distances (23) are rounded.

21. A security element with a grating image according to at least one of claims 15 to 20.

22. The security element according to claim 21, **characterized in that** the security element is a security thread, a label or a transfer element.

23. A security paper with a grating image according to at least one of claims 15 to 20.

24. A security paper with a security element according to claim 21 or 22.

25. A security document with a grating image according to at least one of claims 15 to 20.

26. A security document with a security element according to claim 21 or 22.

27. A security document with a security paper according to claim 23 or 24.

28. A transfer material, in particular hot stamping foil, with a grating image according to claims 15 to 20.

29. An apparatus for producing a grating image having several grating fields which are recognizable separately with the naked eye, with the following devices:
- device for defining a contour line of the grating field,
- device for filling the contour line with a uniform grating pattern from uninterrupted grating lines, wherein the grating pattern within the contour line is described by grating coordinates,
- device for supplying the grating coordinates to a lithography instrument,
- lithography instrument for producing the grating image in a substrate on the basis of the grating coordinates by continuous writing of the grating lines.

30. The apparatus according to claim 29, **characterized in that** the lithography instrument is an electron beam.

## Revendications

1. Procédé d'une image à réseau (16,19) comportant plusieurs champs de réseau (6, 61, 62, 63, 64, 65, 66) séparément reconnaissables à l'œil nu, comprenant les étapes :
- définition d'une ligne de contour (9) d'un champ de réseau (6, 61, 62, 63, 64, 65, 66),
- comblement de la ligne de contour (9) avec un motif à réseau (10) uniforme en lignes de réseau non interrompues, cependant que le motif à réseau (10) est décrit à l'intérieur de la ligne de contour (9) par des coordonnées de réseau,
- injection des coordonnées de réseau à un instrument de lithographie, et
- génération du motif à réseau (10) dans un substrat par écriture en continu des lignes de réseau avec l'instrument de lithographie et à l'aide des coordonnées de réseau.

2. Procédé selon la revendication 1, **caractérisé en ce que** le motif à réseau (10) est constitué par des lignes de réseau (13) juxtaposées.

3. Procédé selon la revendication 2, **caractérisé en ce que**, comme coordonnées de réseau, les points d'intersection des lignes de réseau (13) et de la ligne de contour (9) ainsi qu'éventuellement des points de réseau du champ de réseau (6, 61, 62, 63, 64, 65, 66) situés à l'intérieur de la ligne de contour sont sélectionnés.

4. Procédé selon une des revendications de 1 à 3, **caractérisé en ce que**, à l'aide d'une installation de traitement des données, la ligne de contour du champ de réseau (6, 61, 62, 63, 64, 65, 66) est créée et comblée avec le motif à réseau (10).

5. Procédé selon au moins une des revendications de 1 à 4, **caractérisé en ce que** les lignes de réseau sont rectilignes ou courbées.

6. Procédé selon au moins une des revendications de 1 à 5, **caractérisé en ce que** les coordonnées de réseau des lignes de réseau (13) sont ordonnées séquentiellement en fonction de leurs dispositions spatiales.

7. Procédé selon la revendication 6, **caractérisé en ce que** les coordonnées d'un point de départ (14) d'une ligne de réseau (13) sont respectivement ordonnées à côté des coordonnées d'un d'un point de départ (14) d'une ligne de réseau (13) adjacente, et les coordonnées d'un point d'arrivée (15) d'une ligne de réseau (13) sont respectivement ordonnées à côté des coordonnées d'un point d'arrivée (15) d'une autre ligne de réseau (13) adjacente.

8. Procédé selon la revendication 7, **caractérisé en ce que** les points de départ et d'arrivée de lignes de réseau (13) juxtaposées sont reliées de manière à former un chemin de traitement (17) en méandres.

9. Procédé selon une des revendications de 1 à 8, **caractérisé en ce que** l'instrument de lithographie engendre à l'aide de rayonnement une modification d'état dans un matériau sensible au rayonnement.

10. Procédé selon la revendication 9, **caractérisé en ce que** l'instrument de lithographie est guidé, en fonction des coordonnées de réseau, par-dessus le matériau sensible au rayonnement.

11. Procédé selon la revendication 9 ou 10, **caractérisé en ce que**, comme matériau sensible au rayonnement, une couche de résine photosensible appliquée sur une plaque de substrat est utilisée.

12. Procédé selon une des revendications de 1 à 11, **caractérisé en ce que**, comme instrument de lithographie, un faisceau d'électrons est utilisé.

13. Procédé selon une des revendications de 9 à 12, **caractérisé en ce que**, après la modification d'état engendrée, une couche de métallisation est appliquée sur le matériau sensible au rayonnement, et que, de cela, par voie galvanique, un moulage métallique est généré.

14. Procédé selon la revendication 13, **caractérisé en ce que** le moulage métallique est utilisé pour le gaufrage d'une image à réseau dans un substrat.

15. Image à réseau comportant plusieurs champs de réseau séparément reconnaissables à l'œil nu dans lesquels respectivement un motif à réseau en lignes de réseau non interrompues écrites en continu est agencé, lequel est généré au moyen d'un instrument de lithographie.

16. Image à réseau selon la revendication 15, **caractérisée en ce que**, comme instrument de lithographie, du rayonnement focalisé ou un faisceau focalisé de particules, en particulier un faisceau d'électrons, est utilisé.

17. Image à réseau selon au moins une des revendications de 15 à 16, **caractérisée en ce que** l'image à réseau comporte d'autres parts d'image qui sont générées selon une autre technique.

18. Image à réseau selon au moins une des revendications de 15 à 17, **caractérisée en ce que** le motif à réseau consiste en des lignes de réseau qui constituent un réseau de diffraction.

19. Image à réseau selon au moins une des revendications de 15 à 18, **caractérisée en ce que** les lignes de réseau (13) sont, par des pièces d'inversion (23) agencées à leurs extrémités (14, 15), reliées de manière à former au moins une ligne de réseau en méandres.

20. Image à réseau selon au moins une des revendications de 15 à 19, **caractérisé en ce que** les parcours d'inversion (23) sont arrondis.

21. Elément de sécurité ayant une image à réseau selon au moins une des revendications de 15 à 20.

22. Elément de sécurité selon la revendication 21, **caractérisé en ce que** l'élément de sécurité est un fil de sécurité, une étiquette ou un élément de transfert.

23. Papier de sécurité ayant une image à réseau selon au moins une des revendications de 15 à 20.

24. Papier de sécurité ayant un élément de sécurité selon la revendication 21 ou 22.

25. Document de sécurité ayant une image à réseau selon au moins une des revendications de 15 à 20.

26. Document de sécurité ayant un élément de sécurité selon la revendication 21 ou 22.

27. Document de sécurité ayant un papier de sécurité selon la revendication 23 ou 24.

28. Matériau de transfert, en particulier feuille gaufrée à chaud ayant une image à réseau selon la revendication de 15 à 20.

29. Dispositif de génération d'une image à réseau comportant plusieurs champs de réseau séparément reconnaissables à l'œil nu, ayant les équipements suivants :
- équipement pour la détermination d'une ligne de contour du champ de réseau,
- équipement pour le comblement de la ligne de contour avec un motif à réseau uniforme en lignes de réseau non interrompues, cependant que motif à réseau est décrit à l'intérieur de la ligne de contour par des coordonnées de réseau,
- équipement pour l'injection des coordonnées de réseau à un instrument de lithographie,
- instrument de lithographie pour la génération du motif à réseau dans un substrat à l'aide des coordonnées de réseau, par écriture en continu des lignes de réseau.

30. Dispositif selon la revendication 29, **caractérisé en ce que** l'instrument de lithographie est un faisceau d'électrons.
